# EUROPEAN PATENT APPLICATION

(11) **EP 4 790 478 A1**
(43) Date of publication of application: **12.08.2026**
(21) Application number: 26157222.6
(22) Date of filing: 09.02.2026
(51) Int. Cl.: G02B 27/14, G02B 27/28, G02B 27/01

(54) **OPTICAL APPARATUS, MODULES AND DEVICES**

(30) Priority: 10.02.2025 GB 202501910
(71) Applicant: Nokia Technologies Oy, 02610 Espoo (FI)
(72) Inventor: JÄRVENPÄÄ, Toni Johan, Akaa (FI); SALMIMAA, Marja Pauliina, Tampere (FI)
(74) Representative: Nokia EPO representatives

(57) **Abstract**

Examples of the disclosure relate to optical apparatus for providing a uniform output for different wavelengths of light. The apparatus can comprise a light guide. The light guide can comprise a first layer and a second layer and an interface between the layers. The first layer comprises an in-coupler configured and an out-coupler. The interface between the first layer and the second layer comprises a beamsplitter arranged to split beams of light. The interface is arranged to retain in-coupled light of a first wavelength range in the first layer and split beams of light of a second wavelength range so that part of the in-coupled light of the second wavelength range is reflected into the layer from which the light has travelled and part of the in-coupled light of the second wavelength range passes into the other layer.

## Description

### TECHNOLOGICAL FIELD

Examples of the disclosure relate to optical apparatus, modules and devices. Some relate to optical apparatus, modules and devices for providing a uniform output for different wavelengths of light.

### BACKGROUND

Optical apparatus, such as exit pupil expanders, can be used in display systems and devices such as near eye displays, augmented and/or virtual reality headsets and head up displays for example. Colour uniformity can be difficult to achieve in such devices.

### BRIEF SUMMARY

According to some, but not necessarily all, example of the disclosure there is provided an apparatus comprising:
a light guide, the light guide comprising at least a first layer and a second layer and an interface between the first layer and the second layer wherein;
the first layer of the light guide comprises an in-coupler configured to in-couple one or more input beams of light into the first layer and an out-coupler configured to out-couple the one or more input beams of light from the light guide wherein the one or more input beams of light comprise light of a first wavelength range and light of a second wavelength range; and
the interface between the first layer and the second layer comprises a beamsplitter arranged to split beams of light of the second wavelength range so that the interface is arranged to:
   retain in-coupled light of the first wavelength range in the first layer; and
   split beams of light of the second wavelength range so that part of the in-coupled light of the second wavelength range is reflected into the layer from which the light has travelled and part of the in-coupled light of the second wavelength range passes into the other layer.

The one or more input beams of light can comprise light of a third wavelength range and the interface can be configured to allow in-coupled light of the third wavelength range to pass into the second layer.

The beamsplitter can comprise at least one of:
a dichroic beamsplitter; or
a switchable reflector.

The beamsplitter can be polarisation sensitive.

The beamsplitter can be polarisation insensitive.

The beamsplitter is configured to reflect in-coupled light of the first wavelength range.

The interface can comprise a thin film with a refractive index that is lower than the refractive index of the first layer and the refractive index of the second layer.

The interface can comprise a thin film that is configured to reflect in-coupled light of the first wavelength range but allow in-coupled light of the second wavelength range and the third wavelength range to pass through.

The out-coupler can comprise a transmissive out-coupler.

The out-coupler can comprise a reflective out-coupler.

The in-coupler can comprise a transmissive in-coupler.

The in-coupler can comprise comprises a reflective in-coupler.

The first layer can comprise at least one expander between the in-coupler and the out-coupler where the at least one expander is configured to expand the in-coupled one or more input beams of light.

Wavelengths in the second wavelength range can be shorter than the wavelengths in the first wavelength range.

Wavelengths in the third wavelength range can be shorter than the wavelengths in the second wavelength range.

According to some, but not necessarily all, example of the disclosure there is provided a module, a device, a headset, a vehicle or cab for a vehicle comprising an apparatus as claimed in any preceding claim.

According to various, but not necessarily all, embodiments there is provided an apparatus comprising:
at least one processor; and
at least one memory including computer program code;
the at least one memory storing instructions that, when executed by the at least one processor, cause the apparatus to perform at least a part of one or more methods described herein.

According to various, but not necessarily all, embodiments there is provided an apparatus comprising means for performing at least part of one or more methods described herein. The description of a function and/or action should additionally be considered to also disclose any means suitable for performing that function and/or action. Functions and/or actions described herein can be performed in any suitable way using any suitable method.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or instructions as desired, and as appropriate. The description of a function should additionally be considered to also disclose any means suitable for performing that function.

### BRIEF DESCRIPTION

Some examples will now be described with reference to the accompanying drawings in which:
FIG. 1 shows an example apparatus;
FIGS. 2A to 2C show light paths through an apparatus;
FIGS. 3A and 3B show cross sections of an apparatus;
FIGS. 4A to 4D show light paths through an apparatus;
FIGS. 5A to 5D show light paths through an apparatus;
FIGS. 6A and 6B show light paths through an apparatus and relative brightness levels;
FIGS. 7A to 7C show example dichroic reflectors or beamsplitters;
FIG. 8 shows a switchable beamsplitter or mirror;
FIGS. 9A and 9B show perspective views of an example apparatus; and
FIGS. 10A and 10B show an example head up display comprising an apparatus.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DETAILED DESCRIPTION

Optical apparatus comprising diffractive optics can be used in devices such as mediated headsets or vehicular displays. In an ideal light guiding apparatus the output would have uniform brightness for different wavelengths of light. This can be difficult to achieve in practice.

Examples of the disclosure provide optical apparatus that address these issues.

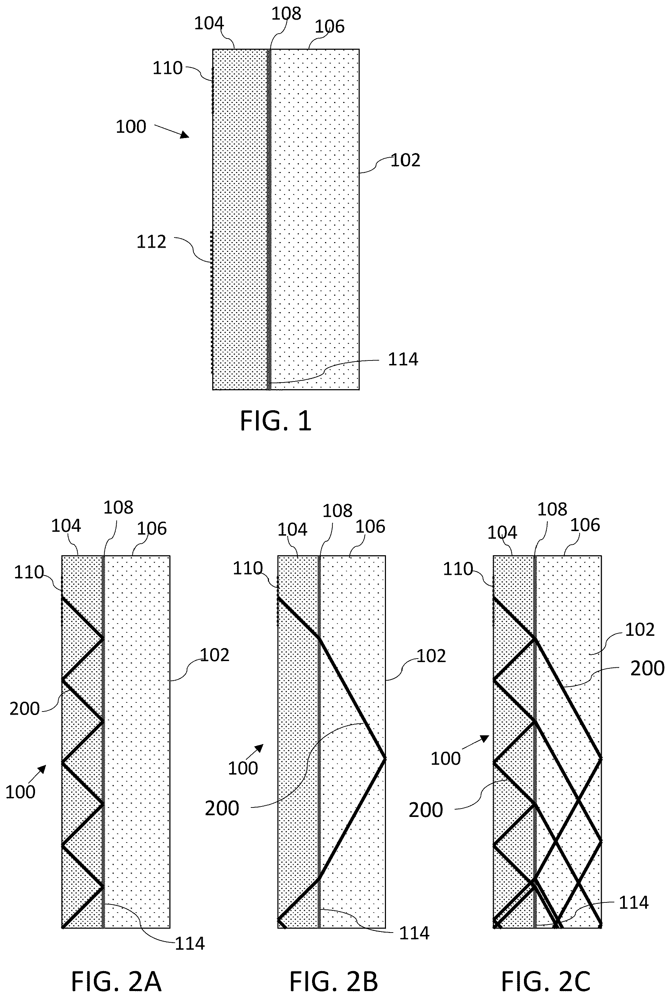

Fig. 1 shows a cross section of an example apparatus 100. The apparatus 100 could be provided in a module, a device, a headset, a vehicle or cab for a vehicle or for any other suitable use.

The apparatus comprises a light guide 102. The light guide 102 is arranged to enable light to be guided through the light guide 102 via internal reflections. The light guide 102 can comprise any suitable material that is sufficiently transparent to light of appropriate wavelength ranges.

In this example the light guide 102 comprises an exit pupil expander. The exit pupil expander is configured to replicate an exit pupil from an optical engine or other optical arrangement. The optical engine could be a display means such as a light engine, projection engine, or a picture generating unit.

The light guide 102 comprises at least a first layer 104 and a second layer 106. The first layer 104 is provided overlaying the second layer 106 in a stacked arrangement. The respective layers 104, 106 can be planar or substantially planar. The respective layers 104, 106 can be arranged to expand an exit pupil in two dimensions.

The respective layers 104, 106 are arranged to enable light to be guided through the light guiding member 102 via internal reflections.

In the example of Fig. 1 the light guide 102 comprises two layers. The light guide 102 can comprise other numbers of layers in other examples however, having only two layers 104, 106 can make the apparatus 100 simpler and cheaper to manufacture.

The first layer 104 of the light guide 102 comprises an in-coupler 110 and an out-coupler 112. The in-coupler 110 is configured to in-couple one or more input beams of light into the first layer 104. The out-coupler 112 is configured to out-couple the one or more input beams of light from the light guide 102. The out-coupler 112 is configured to out-couple the one or more input beams of light from the first layer 104 of the light guide 102. The one or more input beams of light comprise light of a first wavelength range and light of a second wavelength range. Wavelengths in the second range are shorter than the wavelengths in the first wavelength range. For example, the first wavelength range could comprise visible red light and the second wavelength range could comprise visible green light. The one or more input beams of light are not shown in Fig. 1 for clarity.

The in-coupler 110 and/or the out-coupler 112 can be configured to incouple and expand the exit pupil. The out-coupler 112 can be configured to expand the in-coupled beams of light either in one or in two dimensions. The in-coupler 110 and/or the out-coupler 112 can be diffractive or semi-reflective. The diffractive in-coupler 110 can be optimized to work in transmissive or in reflective mode. The diffractive out-coupler can be optimized to work in transmissive or in reflective mode.

In some examples the first layer 104 can also comprise at least one expander along the optical path between the in-coupler 110 and the out-coupler 112. The at least one expander can be configured to expand the in-coupled beams of light. The expander can be diffractive or semi-reflective.

The in-coupler 110, out-coupler 112, and/or expander can comprise diffractive means. The diffractive means can comprise any means that can be configured to diffract the input beams of light. The diffractive means can comprise any one or more of a diffractive optical element, diffractive structure, diffraction gratings, holographic gratings, Bragg gratings, rulings, ridges, surface relief diffractive gratings, 1D gratings, 2D gratings, or any suitable optical component or feature having a periodic structure that splits and diffracts light into several beams travelling in different directions.

The apparatus 100 also comprises an interface 108 between the first layer 104 and the second layer 106. The interface 108 between the first layer 104 and the second layer 106 comprises a beamsplitter 114. The beamsplitter 114 can comprise a dichroic beamsplitter, a switchable reflector, or any other suitable means. The beamsplitter 114 can be polarization sensitive or polarization insensitive.

The beamsplitter 114 is arranged to split beams of light of the second wavelength range. The interface 108 is therefore arranged to retain in-coupled light of the first wavelength range in the first layer 104 and split beams of light of the second wavelength range. The splitting of the beams of light of the second wavelength range enables part of the in-coupled light of the second wavelength range to be reflected into the layer from which the light has travelled and part of the in-coupled light of the second wavelength range to pass into the other layer. For example, for light travelling from the first layer 104 towards the second layer 106 part of the in-coupled light of the second wavelength range is reflected into the first layer 104 and part of the in-coupled light of the second wavelength range passes into the second layer 106. Similarly, for light travelling from the second layer 106 towards the first layer 104 part of the in-coupled light of the second wavelength range is reflected into the second layer 106 and part of the in-coupled light of the second wavelength range passes into the first layer 104.

In some examples the beamsplitter 114 can be configured to reflect in-coupled light of the first wavelength range. This can enable the interface 108 to retain in-coupled light of the first wavelength range in the first layer 104.

In some examples the interface 108 can comprise a thin film with a refractive index that is lower than the refractive index of the first layer 104 and the refractive index of the second layer 106. The thin film could be provided between the first layer 104 and the beamsplitter 114. The thin film can be configured to reflect in-coupled light of the first wavelength range with large incidence angles but allow in-coupled light of the second wavelength range with smaller incidence angles and third wavelength range with smaller incidence angles to pass through. The thin film can therefore enable the interface 108 to retain in-coupled light of the first wavelength range in the first layer 104 through total internal reflection. Light losses such as absorption at the reflection interface can be reduced by enabling total internal reflection instead of or in addition to regular reflection.

The thickness of the thin film can be substantially larger than the wavelength of the light to reduce any light leakage through frustrated total internal reflection.

The thin film can be chemically compatible with the surrounding materials. For example, the thin film can be used as an optical adhesive to bond the surrounding materials. Adhesion properties between the thin film and adjacent components should be strong enough so that the apparatus 100 will not delaminate over the operating conditions.

In some examples the one or more input beams of light can comprise light of a third wavelength range. In such examples, the interface 108 can be configured to allow in-coupled light of the third wavelength range to pass into the second layer 106. Wavelengths in the third wavelength range are shorter than the wavelengths in the second wavelength range. For example, the third wavelength range could comprise visible blue light.

Figs. 2A to 2C show light paths through an apparatus 100. The in-coupled light 200 shown in Figs. 2A to 2C is light in a second wavelength range. The in-coupled light of the first wavelength range and third wavelength range are not shown in Figs. 2A to 2C for clarity. The out-coupler 112 is not shown in Figs 2A to 2C

Fig. 2A shows a light path for in-coupled light 200 of the second wavelength range that is reflected by the interface 108. The light is reflected back into the first layer 104. The reflected light doesn't pass through into the second layer 106. The light is trapped in the first layer 104. The light only travels through part of the thickness of the light guide 102

Fig. 2B shows a light path for in-coupled light 200 of the second wavelength range that passes through the interface 108. The light passes through from the first layer 104 to the second layer 106. The light can pass through the entire thickness of the light guide 102.

Fig. 2C shows both light paths for light reflected by the interface 108 and light paths for light that passes through the interface 108. This also shows that the interface 108 would split the in-coupled beam of light 200 at each interaction.

The splitting of the in-coupled light 200 of the second wavelength range by the interface 108 provides different total internal reflection lengths for the light depending on whether it is reflected back into the first layer 104 or if it passes through into the second layer 106. The total internal reflection length is the distance between consecutive total internal reflections on one surface of the light guide 102. The total internal reflection length for light that is reflected back into the first layer 104 is shorter than the total internal reflection length that passes through into the second layer 106.

The combination of the different light paths can improve the uniformity of the light of the second wavelength range in the output of the apparatus 100. The combination of the different light paths can also provide for better overlap of the replicated exit pupils of the light of the second wavelength range in the output of the apparatus 100.

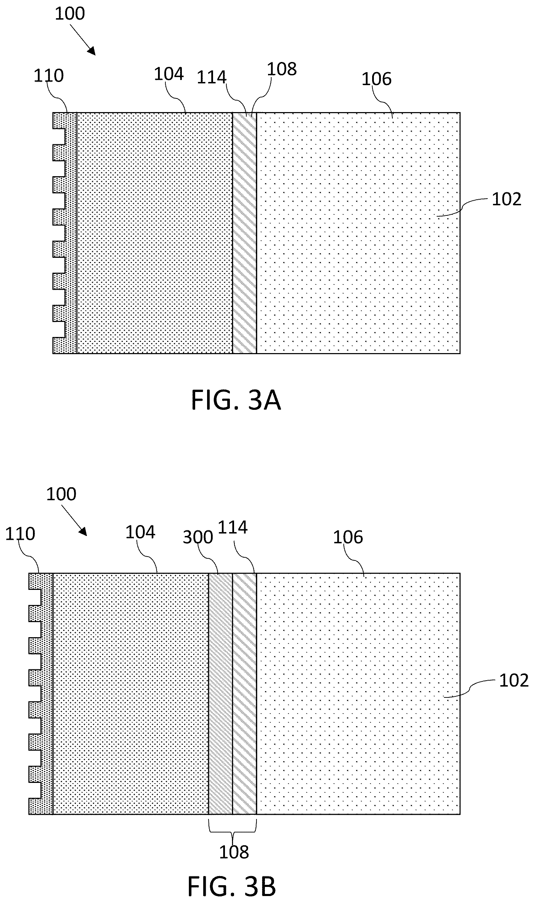

Figs. 3A and 3B show local cross sections of an apparatus 100 that could be used in some examples of the disclosure.

In the example of Fig. 3A the interface 108 comprises a beamsplitter 114. In this case the beamsplitter 114 is configured to reflect the light of the first wavelength range. The beamsplitter 114 is dichroic so that it is wavelength dependent.

In the example of Fig. 3B the interface 108 comprises a thin film 300 and a beamsplitter 114. The thin film 300 is positioned between the first layer 104 and the beamsplitter 114 so that in-coupled light is incident on the thin film 300 before it is incident on the beamsplitter 114.

The thin film 300 can have a low refractive index so that it reflects light of the first wavelength range. The refractive index of the thin film 300 can be low compared to the refractive index of the first layer 104 or the second layer 106.

The thin film 300 can reflect the light of the first wavelength range so that it is not incident on the beamsplitter 114. In this example, the properties of beamsplitter 114 do not necessarily need to take into account the first wavelength range.

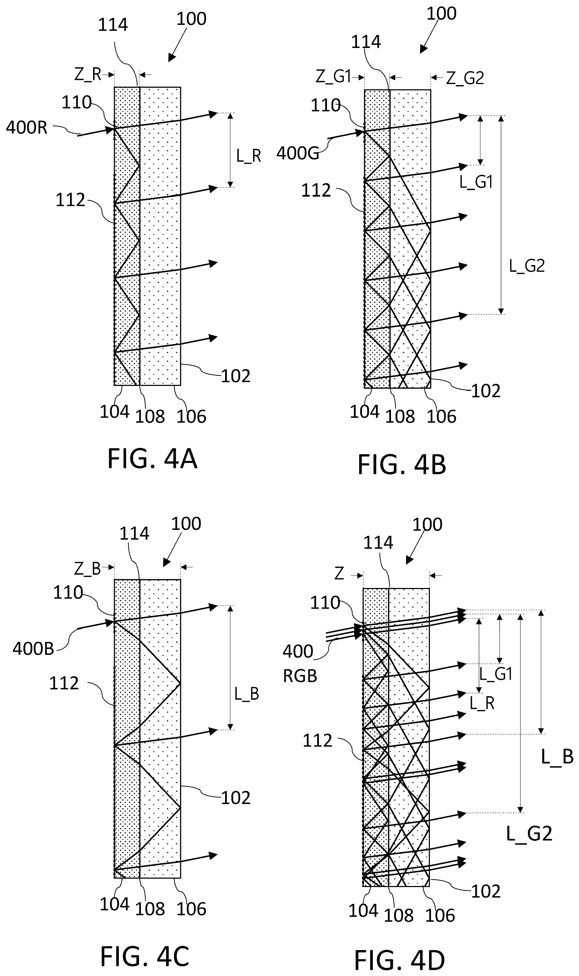

Figs. 4A to 4D show light paths through an apparatus 100 for different wavelengths of light. In this example the apparatus 100 comprises a beamsplitter 114 in the interface 108. Similar light paths would be obtained if the interface 108 comprised a thin film 300 and a beamsplitter 114.

An input beam of light 400 is provided to the apparatus 100. The input beams of light 400 can be provided from a light engine, picture generating unit, or any other suitable source. The in-coupler 110 is positioned within the light guide 102 so that, in use, the in-coupler 110 can be positioned adjacent to a light engine or any other suitable source. The in-coupler 110 can be aligned with the exit pupil of the light engine.

The input beam of light 400 can comprise different wavelength ranges. The first wavelength range can comprise predominantly red light, the second wavelength range can comprise predominantly green light, the third wavelength range can comprise predominantly blue light. Fig. 4A shows the light path for the first wavelength range, Fig. 4B shows the light path for the second wavelength range, Fig. 4C shows the light path for the third wavelength range and Fig. 4D shows the combined light paths.

The apparatus 100 comprises an in-coupler 110 and an out-coupler 112. The in-coupler 110 is a transmissive in-coupler. The incoupled light are transmitted through the diffractive grating of the in-coupler 110 into the first layer 104 of the light guide 102.

As shown in Fig. 4A the in-coupled light of the first wavelength range 400R is reflected by the interface 108 so that the in-coupled light of the first wavelength range 400R is retained in the first layer 104. The light of the first wavelength range 400R only stays in the first layer 104 of the light guide 102 so the light guide 102 has an effective thickness of Z_R for the first wavelength range where the thickness Z_R is the thickness of the first layer 104. The total internal reflection length for the first wavelength range is indicated as L_R in Fig. 4A.

As shown in Fig. 4B some of the in-coupled light of the second wavelength range 400G is reflected by the interface so that it is reflected back into the first layer 104 and some of the in-coupled light of the second wavelength range 400G passes into the second layer 106. The light guide 102 has different effective thickness for light of the second wavelength range 400G depending on whether the light stays in the first layer 104 of the light guide 102 or if it passes through to the second layer 106 of the light guide 102. The light guide 102 has an effective thickness of Z_G1 for the reflected light of the second wavelength range where the thickness Z_G1 is the thickness of the first layer 104. The light guide 102 has an effective thickness of Z_G2 for the light of the second wavelength range that passes into the second layer 106 where the thickness Z_G2 is the combined thickness of the first layer 104 and the second layer 106.

The total internal reflection length for the second wavelength range depends on whether the light passes through the interface 108 or not. The total internal reflection length for light of the second wavelength range that is reflected by the interface 108 is L_G1. The total internal reflection length L_G1 is shorter than the total internal reflection length L_R. The total internal reflection length for light of the second wavelength range that passes through the interface 108 is L_G2. In this design example, layer 104 and 106 material properties and thicknesses are selected so that the total internal reflection length L_G2 is longer than the total internal reflection length L_R. The overall total internal reflection length for the light of the second wavelength range is given by a combination or average of the two different total internal reflection lengths L_G1, and L_G2. The combination can be weighted based on the proportion of light of the second wavelength range that is transmitted or reflected by the interface 108.

As shown in Fig. 4C the in-coupled light of the third wavelength range 400B passes through the interface so that it passes through to the second layer 106. The light of the third wavelength range 400B passes through both the first layer 104 of the light guide 102 and the second layer 106 of the light guide 102. The light guide 102 has an effective thickness of Z_B for the third wavelength range where the thickness Z_B is the combined thickness of the first layer 104 and the second layer 106. The total internal reflection length for the third wavelength range is indicated as L_B in Fig. 4C. In this design example, layer 104 and 106 material properties and thicknesses are selected so that the total internal reflection length L_B is longer than the total internal reflection length L_R. This is typically required for good color uniformity between the first and the third wavelength ranges. The total internal reflection length L_B is also longer than the total internal reflection length L_G1 but shorter than the total internal reflection length L_G2.

Fig. 4D shows the in-coupled light of the first wavelength range, the second wavelength range and the third wavelength range 400RGB. This shows that $L_G 1 < L_R < L_B < L_G 2$

The combination or average L_Average of the two different total internal reflection lengths L_G1 and L_G2 can be set by the optimized properties of the beamsplitter 114 so that $L_R < L_Average < L_B$

The above is typically a requirement for achieving good out-coupling uniformity for all the three wavelength ranges. As this requirement heavily depends on material properties, such as blue absorption on the light guide wafer, and grating properties, such as grating period, the order of the total internal reflection lengths could be different in different examples.

In the example of Figs. 4A to 4D the in-coupler 110 comprises a transmissive in-coupler 110. The in-coupled rays are transmitted through the diffractive gratings of the in-coupler 110 into the light guide 102. In the examples of Figs. 4A to 4D the out-coupler 112 comprises a reflective out-coupler 112. The out-coupled rays are diffracted from the reflective gratings of the out-coupler 112 and travel through the light guide 102 before they are output.

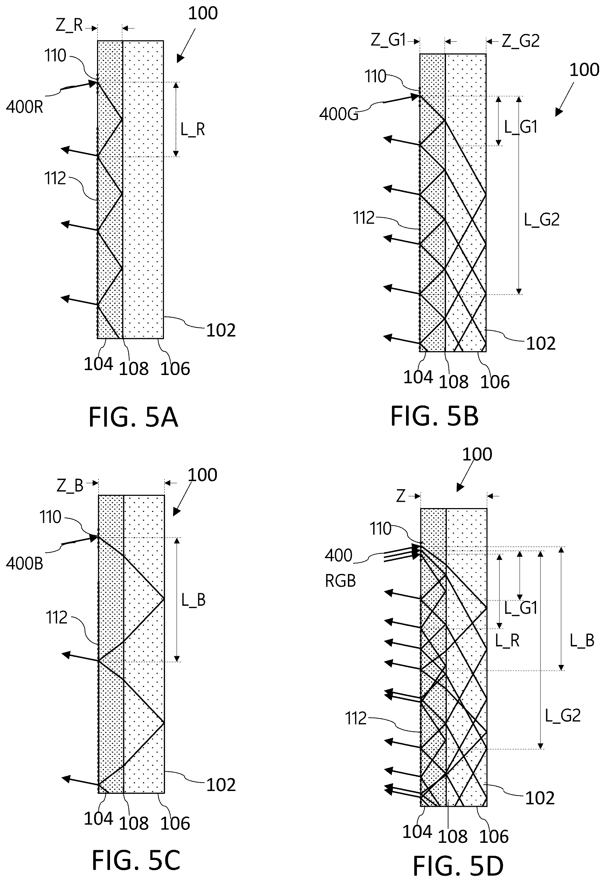

Figs. 5A to 5D also show light paths through an apparatus 100 for different wavelengths of light. This is similar to the examples shown in Figs. 4A to 4D, however in this example, the in-coupler 110 is transmissive and the out-coupler 112 is also transmissive.

In some examples it can be useful to use a transmissive out-coupler 112 because the out-coupled light can be transmitted directly out of the light guide 102 without having to travel through the layers 104, 106. The out-coupled light in this case does not have to interact with the beamsplitter 114 and would not be reflected towards an unwanted direction.

The light rays would be out-coupled in both directions but only the light out-coupled in the direction of interest is shown in Figs. 4A to 5D.

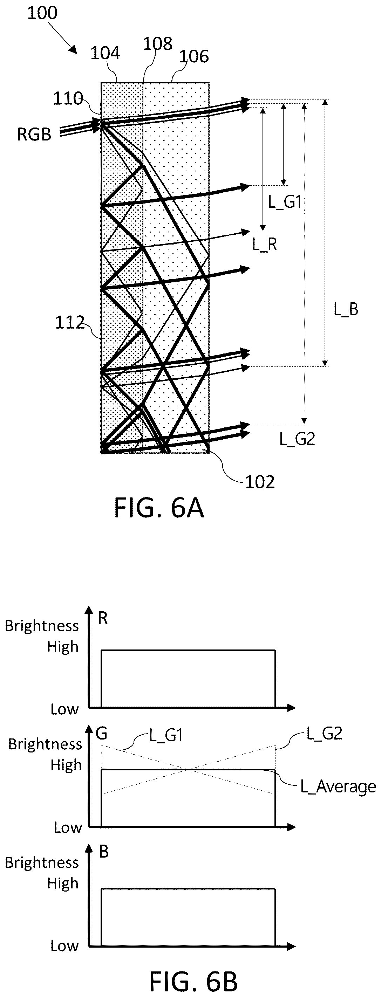

Figs. 6A and 6B show light paths through an apparatus 100 and relative brightness levels. The apparatus 100 shown in Fig. 6A can be as shown in Figs. 4A to 4D with a transmissive in-coupler 110 and a reflective out-coupler 112. Other arrangements for the apparatus 100 could also be used in other examples.

Fig. 6A shows the total internal reflection lengths for different wavelengths of light. The total internal reflection length for the first wavelength range is indicated as L_R. The total internal reflection length for light of the second wavelength range that is reflected by the interface 108 is indicated as L_G1. The total internal reflection length for light of the second wavelength range that passes through the interface 108 is indicated as L_G2. The total internal reflection length for the third wavelength range is indicated as L_B. L_Average is the combination or average of the two different total internal reflection lengths L_G1 and L_G2

Fig. 6B shows the respective brightness levels for different wavelength ranges. The first plot shows the brightness level for the first wavelength range. In this example the first wavelength range comprises red light. The brightness level is uniform or substantially uniform across the output.

The second plot shows the brightness level for the second wavelength range. In this example the second wavelength range comprises green light. The brightness level for the second wavelength range comprises a contribution from light that is reflected by the beamsplitter 114 and a contribution from light that is not reflected by the beamsplitter 114. The light that would always be reflected by the beamsplitter 114 would be brighter towards the left of the output. The light that would never be reflected by the beamsplitter 114 would be brighter towards the right of the output. In this design example, the light from the two different paths combines so that the brightness level is uniform or substantially uniform across the output.

The third plot shows the brightness level for the third wavelength range. In this example the third wavelength range comprises blue light. The brightness level is uniform or substantially uniform across the output.

In examples of the disclosure the average total internal reflection length for the second wavelength range can be optimized by the design of the beamsplitter 114. For example the relative proportion of transmission and reflection of the beamsplitter 114 can be selected to control the average total internal reflection length. For instance, in some examples the beamsplitter 114 could be 50R/50T so that fifty per cent of the light is reflected and fifty per cent of the light is transmitted. In other examples the beamsplitter 114 could be 30R/70T so that thirty per cent of the light is reflected and seventy per cent of the light is transmitted. Other ratios of transmission and reflection could be used in other examples.

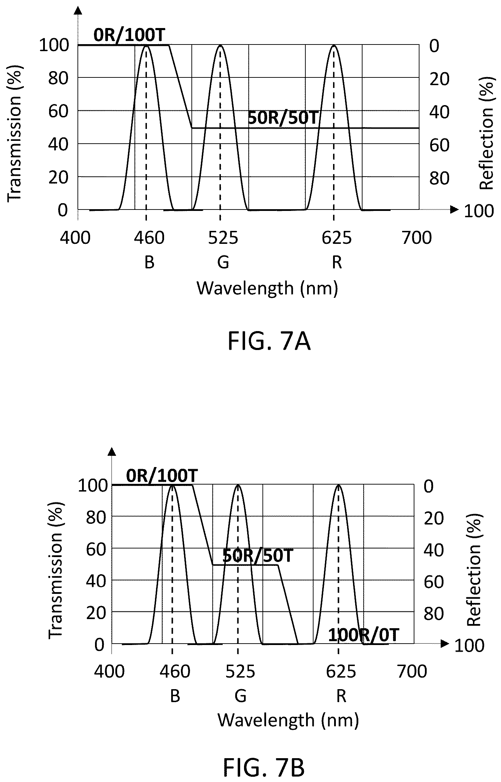

Figs. 7A to 7C show example dichroic reflectors or beamsplitters 114. The dichroic reflectors or beamsplitters 114 can be used in the interface 108. The dichroic reflectors or beamsplitters 114 are arranged to separate broad spectrum of light into two components, a reflected component and a transmitted component. A dichroic reflector or beamsplitter 114 can comprise multiple coating layers of transparent dielectric materials. The coating layers can be deposited on a substrate. The coating layers can be arranged to control the reflected angles and wavelengths of the incident light beams. The coating layers can be either polarization sensitive or insensitive. The dichroic reflectors or beamsplitters 114 can be single-edge long/short-pass dichroic or polychroic.

In the examples of Figs. 7A to 7C the transmission/reflection percentage is shown on the vertical axis and the wavelength are shown on the horizontal axis. The charts are shown for a single polarization and for a desired incidence angle range.

Fig. 7A shows a first design for a dichroic beamsplitter 114. In this example the beamsplitter 114 provides full transmittance for wavelengths below around 480nm. That is, the beamsplitter 114 provides full transmittance for light of the third wavelength range. For wavelengths above around 480nm (the first and second wavelength range) the beamsplitter 114 provides fifty percent reflection and fifty percent transmittance.

The example beamsplitter 114 in Fig. 7A is a single-edge short-pass beamsplitter 114. This beamsplitter 114 could be used with a low refractive index thin film 300 where the thin film 300 can be arranged to totally reflect light of the first wavelength range but transmit light of the second wavelength range. As the light of the first wavelength range is reflected before it reaches the beamsplitter 114 the design of beamsplitter 114 does not have impact on the path of the light of the first wavelength range.

Fig. 7B shows a second design for a dichroic beamsplitter 114. In this example the beamsplitter 114 provides full transmittance for wavelengths below around 480nm (third wavelength range), fifty percent reflection and fifty percent transmittance for wavelengths between 480nm and 575nm (second wavelength range) and full reflection for wavelengths above around 575nm (first wavelength range). This polychroic beamsplitter 114 could be used without a thin film 300 because all of the light of the first wavelength range would be reflected by the beamsplitter 114.

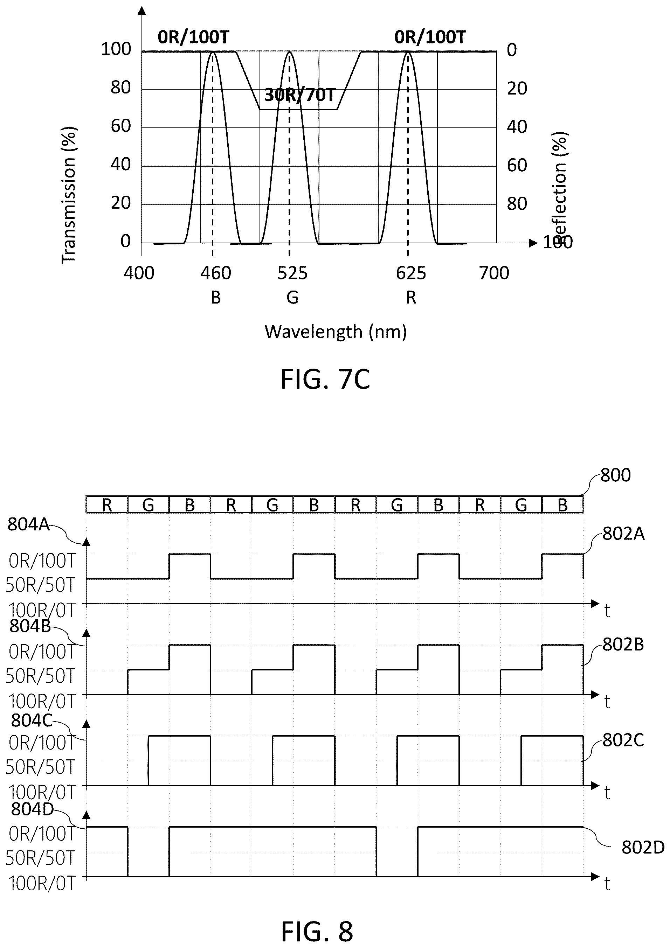

Fig. 7C shows a third design for a dichroic beamsplitter 114. In this example the beamsplitter 114 provides full transmittance for wavelengths below around 480nm (third wavelength range), thirty percent reflection and seventy percent transmittance for wavelengths between 480nm and 575nm (second wavelength range) and full transmittance for wavelengths above around 575nm (first wavelength range). This polychroic beamsplitter 114 could be used with reflective in-couplers 110 and reflective out-couplers 112 because the beamsplitter 114 would transmit most of the light rays entering or exiting the light guide 102.

Fig. 8 shows a switchable beamsplitter 114 that could be used in examples of the disclosure. The beamsplitter 114 can comprise switchable mirrors or reflectors. The mirrors or reflectors can be electrically switchable. For example, the mirrors or reflectors can comprise liquid crystal layers, or any other suitable means, that can be switched between an on state and off state in response to an applied voltage. In this example it is assumed that one of the states (on or off) would result in reflection or partial reflection and the other of the states would result in transmission or partial transmission. Other means could be used in combination with the switchable components in order to achieve the appropriate levels of transmission and reflectance.

The switchable beamsplitter could be used with or without a thin film 300.

In Fig. 8 the plot 800 shows the sequential driving of the RGB fields of a display. The plots 802A-802D show beamsplitter driving of four different examples 804A to 804D.

Fig. 8 shows four example driving schemes for the switchable beamsplitter. In the first example 804A the beamsplitter 114 is configured to provide fifty percent reflectance and fifty percent transmittance for the first wavelength range for every color field for which light of the first wavelength range is provided. The beamsplitter 114 is configured to provide fifty percent reflectance and fifty percent transmittance for the second wavelength range for every color field for which light of the second wavelength range is provided. The beamsplitter 114 is configured to provide zero reflectance and complete transmittance for the third wavelength range for every color field for which light of the third wavelength range is provided.

In this case a low refractive index thin film 300 would be needed to provide the total internal reflection of the light of the first wavelength range.

In the second example 804B the beamsplitter 114 is configured to provide complete reflectance and zero transmittance for the first wavelength range for every color field for which light of the first wavelength range is provided. The beamsplitter 114 is configured to provide fifty percent reflectance and fifty percent transmittance for the second wavelength range for every color field for which the second wavelength range is provided. The beamsplitter 114 is configured to provide zero reflectance and complete transmittance for the third wavelength range for every color field for which light of the third wavelength range is provided.

In this example the thin film 300 is not needed before the beamsplitter 114 because the beamsplitter 114 will reflect all of the light of the first wavelength range.

In the third example 804C the beamsplitter 114 is configured to provide complete reflectance and zero transmittance for the first wavelength range for every color field for which light of the first wavelength range is provided. The beamsplitter 114 is configured to provide complete reflectance and zero transmittance for the first half of color fields for which the second wavelength range is provided. The beamsplitter 114 is also configured to provide complete transmittance and zero reflectance for the second half of color fields for which the second wavelength range is provided. The beamsplitter 114 is configured to provide zero reflectance and complete transmittance for the third wavelength range for every color field for which light of the third wavelength range is provided.

In this example the thin film is not needed before the beamsplitter 114 because the beamsplitter 114 will reflect all of the light of the first wavelength range.

In the fourth example 804D the beamsplitter 114 is configured to provide complete transmittance and zero reflectance for the first wavelength range for every color field for which light of the first wavelength range is provided. The beamsplitter 114 is configured to provide complete reflectance and zero transmittance for alternate color fields for which light of the second wavelength range is provided. The beamsplitter 114 is also configured to provide complete transmittance and zero reflectance for the other color fields for which the second wavelength range is provided. The beamsplitter 114 is configured to provide zero reflectance and complete transmittance for the third wavelength range for every color field for which light of the third wavelength range is provided.

In this case a low refractive index thin film would be needed to provide the total internal reflection of the light of the first wavelength range.

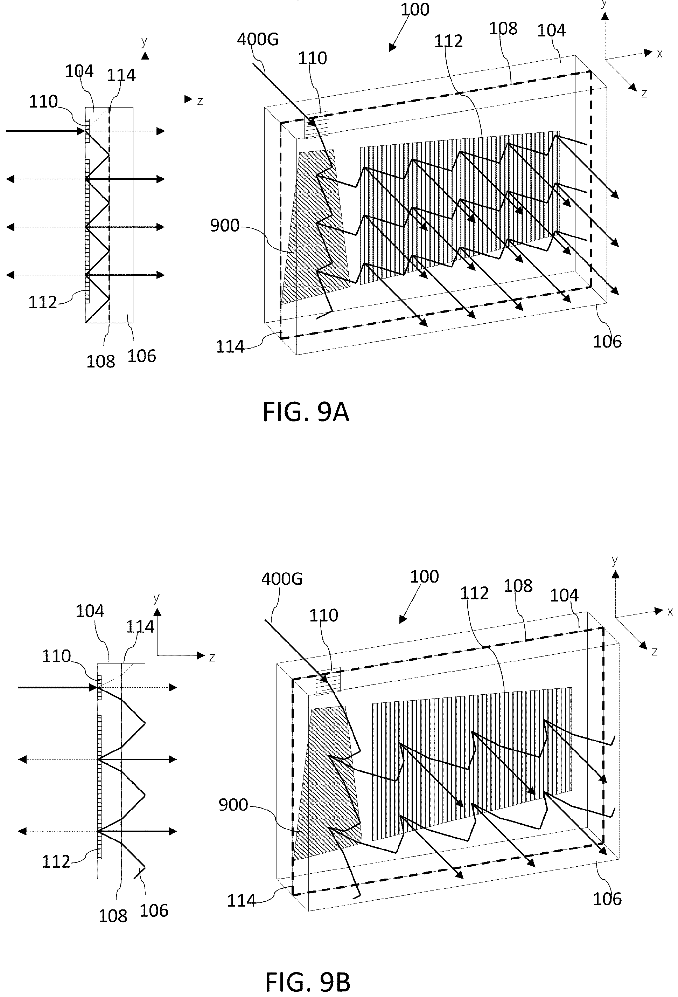

Figs. 9A and 9B show perspective views of an apparatus 100. The apparatus 100 comprises a light guide 102 comprising a first layer 104 and a second layer 106 with an interface 108 comprising a beamsplitter 114 which can be as described above. As shown in Figs. 9A and 9B the layers 104, 106 have a depth in the z-direction. The layers 104, 106 have a surface that covers an x dimension and a y dimension.

Figs. 9A and 9B show that the light guide 102 can replicate the in-coupled beams of light and therefore expand the exit pupil of the in-coupled light in two dimensions. The light beams can for example be expanded in the x dimension and the y dimension.

An in-coupler 110, an expander 900, and an out-coupler 112 are provided on the first layer 104. The in-coupler 110 is configured to in-couple the beams of light. The out-coupler 112 is configured to out-couple the incoupled beams of light. The expander 900 is positioned on the path of light between the in-coupler 110 and the out-coupler 112. The expander 900 is configured to expand the in-coupled beams of light. The expander 900 can be configured to expand the in-coupled beams of light in the first dimension. The out-coupler 112 is configured to expand the in-coupled beams of light. The out-coupler 112 can be configured to expand the in-coupled beams of light in the second dimension.

Different layouts could be used in different examples. For example, an in-coupler 110 with 1D gratings and an out-coupler 112 with 2D gratings could be provided on the first layer 104. The out-coupler 112 could be configured to expand the in-coupled beams of light both in the first and the second dimensions. A separate expander 900 would not be needed in this example.

Fig. 9A shows light of the second wavelength range 400G that is reflected by the beamsplitter 114. This light is always reflected by the beamsplitter 114 and remains in the first layer 104. This light has a small total internal reflection length.

Fig. 9B shows light of the second wavelength range 400G that is not reflected by the beamsplitter 114. This light travels through both the first layer 104 and the second layer 106. This light has a larger total internal reflection length.

The beamsplitter 114 can be arranged so that the beamsplitter 114 has different properties in different regions of the light guide 102. For instance, the beamsplitter 114 could be arranged to be more reflective close to the incoupler 110 and more transmissive further away from the in-coupler 110. This could potentially help in improving color uniformity and/or efficiency of the light guide 102.

Variations to the apparatus 100 could be made in examples of the disclosure. For instance, the in-coupling efficiency could be increased based by providing a beamsplitter with zero reflectance and complete transmittance for light of the second wavelength range (or other wavelength ranges) near the first in-coupler 110. In such cases all of the incoupled light could use both the first layer 104 and the second layer 106 in the beginning. The in-coupled light would meet the first in-coupler 110 less often and so less out-coupling from the in-coupling would occur. This would increase the in-coupling efficiency. This could be used with both fixed or switchable beamsplitters.

Conversely, in some examples, the in-coupling efficiency could be increased based by providing a beamsplitter with zero transmittance and complete reflectance for light of the second wavelength range (or other wavelength ranges) near the first in-coupler 110. In such cases the T₀ rays that do not in-couple into the light guide 102 would reflect back from the beamsplitter 114 towards the in-coupler 110. This could replace or support a recycling mirror and could provide better in-coupling efficiency.

Respective parameters of the components of the apparatus 100 are not independent of each other so that adjusting one parameter in order to improve brightness or uniformity for one wavelength range can impact on other wavelength ranges. Any change in any of the design parameters would affect at least two of the three wavelength ranges. Parameters of the components that can be controlled by selection or design could comprise materials used for the layers 104, 106 (which define properties such as the refractive index, transmittance, etc.), thicknesses of the layers 104, 106, dichroic beamsplitter 114 reflectance/transmittance properties, thin-film refractive index and thickness, and the grating and layout designs of the in-coupler 110, out-coupler 112 and expander 900 or any other suitable parameters or combinations of parameters. The most independent design parameters are those related to the second layer 106, as these should have very little effect on the first wavelength range.

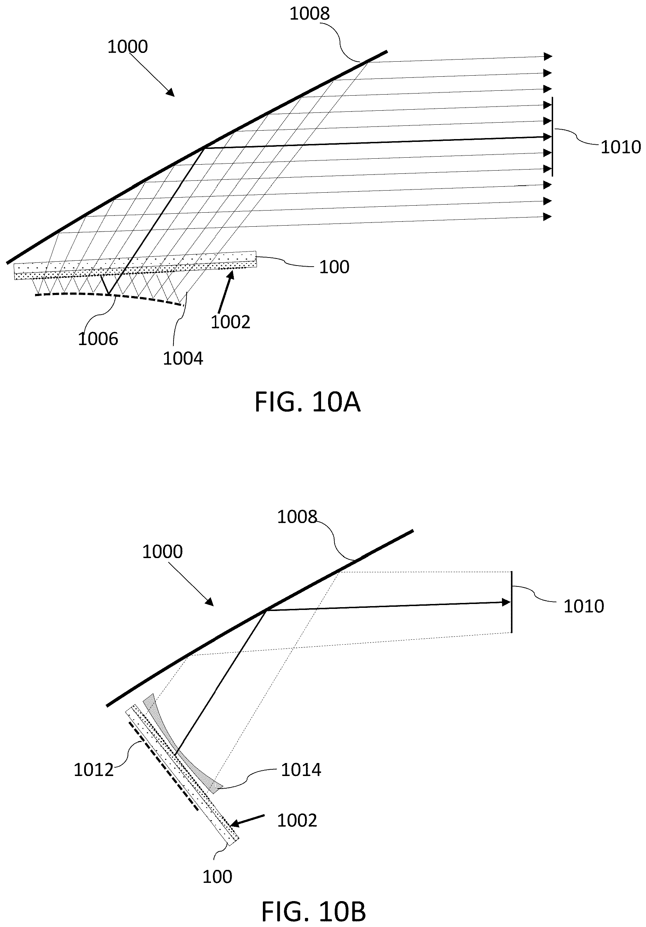

Figs. 10A and 10B show an example head up display (HUD) 1000 comprising an apparatus 100. The HUD 1000 could be provided in a vehicle such as a terrestrial vehicle, an aerial vehicle, an aquatic vehicle or any other suitable type of vehicle.

The HUD 1000 comprises an image source 1002 and an apparatus 100. The apparatus 100 can be as described herein. The in-couplers 110 and out-couplers 112 in the examples of Figs. 10A and 10B can be designed to be transmissive. In other examples reflective in-couplers 110 and/or out-couplers 112 could be used. The image generating unit 1002 is positioned to provide an input beam of light to the apparatus 100. The apparatus 100 is configured to expand the input beam of light and provide an expanded beam of light 1004 as an output.

In the example of Fig. 10A expanded beam of light 1004 is directed towards a compensation mirror 1006 and reflected from the compensation mirror 1006 towards a windshield 1008. The compensation mirror 1006 and/or layers 104, 106 of the apparatus 100 can be curved or partially curved to compensate for curvature of the windshield 1008.

The expanded beam of light 1004 is reflected from the windshield 1008 towards a user. The expanded beam of light 1004 comprises an expanded exit pupil 1010. The expanded exit pupil can be directed towards the line of sight of a user of the vehicle. The user of the vehicle can perceive the expanded beams of light 1004 as virtual images and/or augmented reality images. The focus distance of the images can be set to infinity or closer, depending on the design of the compensation mirror 1006 and the layers 104, 106 of the apparatus 100.

In the example of Fig. 10B the apparatus 100 is arranged in a different configuration. In this configuration the expanded beam of light 1004 from the apparatus 100 is directed through a compensation lens 1014 towards a windshield 1008. Part of the expanded beam of light 1004 from the apparatus 100 is also directed towards a recycling mirror 1012 and reflected from the recycling mirror 1012 through a compensation lens 1014 towards a windshield 1008. The compensation lens 1014 and/or layers 104, 106 of the apparatus 100 can be curved or partially curved to compensate for curvature of the windshield 1008.

The expanded beam of light 1004 is reflected from the windshield 1008 towards a user. The expanded beam of light 1004 comprises an expanded exit pupil 1010. The expanded exit pupil can be directed towards the line of sight of a user of the vehicle. The user of the vehicle can perceive the expanded beams of light 1004 as virtual images and/or augmented reality images. The focus distance of the images can be set to infinity or closer, depending on the design of the compensation mirror 1006 and the layers 104, 106 of the apparatus 100.

In the examples of Figs. 10A and 10B the expanded beam of light 1004 or part of it is reflected back through the light guide 102 from the compensation mirror 1006 or the recycling mirror 1012. Some of this light might be reflected back towards the compensation mirror 1006 or the recycling mirror 1012 from the beamsplitter 114. The light that is reflected back can be reduced through the selection of appropriate properties of the beamsplitter 114.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following: " and "at least one of " and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

As used herein, the terms "the at least one" and "the one or more" mean "any one of the at least one" and "any one of the one or mor" respectively.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

## Claims

1. An apparatus (100) comprising:
a light guide (102), the light guide comprising at least a first layer (104) and a second layer (106) and an interface (108) between the first layer and the second layer wherein;
the first layer (104) of the light guide comprises an in-coupler (110) configured to in-couple one or more input beams of light into the first layer and an out-coupler (112) configured to out-couple the one or more input beams of light from the light guide wherein the one or more input beams of light comprise light of a first wavelength range and light of a second wavelength range; and
the interface (108) between the first layer (104) and the second layer (106) comprises a beamsplitter (114) arranged to split beams of light of the second wavelength range so that the interface is arranged to:
retain in-coupled light of the first wavelength range in the first layer; and
split beams of light of the second wavelength range so that part of the in-coupled light of the second wavelength range is reflected into the layer from which the light has travelled and part of the in-coupled light of the second wavelength range passes into the other layer.

2. The apparatus (100) as claimed in claim 1 wherein the one or more input beams of light comprise light of a third wavelength range and the interface is configured to allow in-coupled light of the third wavelength range to pass into the second layer.

3. The apparatus (100) as claimed in any preceding claim wherein the beamsplitter comprises at least one of:
a dichroic beamsplitter; or
a switchable reflector.

4. The apparatus as claimed in any preceding claim wherein the beamsplitter is polarisation sensitive.

5. The apparatus (100) as claimed in any of claims 1 to 3 wherein the beamsplitter is polarisation insensitive.

6. The apparatus (100) as claimed in any preceding claim wherein the beamsplitter is configured to reflect in-coupled light of the first wavelength range.

7. The apparatus (100) as claimed in any preceding claim wherein the interface comprises a thin film with a refractive index that is lower than the refractive index of the first layer and the refractive index of the second layer.

8. The apparatus (100) as claimed in any preceding claim wherein the interface comprises a thin film that is configured to reflect in-coupled light of the first wavelength range but allow in-coupled light of the second wavelength range and the third wavelength range to pass through.

9. The apparatus (100) as claimed in any preceding claim wherein the out-coupler comprises a transmissive out-coupler or a reflective out-coupler.

10. The apparatus (100) as claimed in any preceding claim wherein the in-coupler comprises a transmissive in-coupler or a reflective in-coupler.

11. The apparatus (100) as claimed in any preceding claim wherein the first layer comprises at least one expander between the in-coupler and the out-coupler where the at least one expander is configured to expand the in-coupled one or more input beams of light.

12. The apparatus (100) as claimed in any preceding claim wherein wavelengths in the second wavelength range are shorter than the wavelengths in the first wavelength range.

13. The apparatus (100) as claimed in any of claims 2 to 12 wherein wavelengths in the third wavelength range are shorter than the wavelengths in the second wavelength range.

14. The apparatus (100) as claimed in any preceding claim wherein the image generating unit (1002) is positioned to provide the input beam of light to the apparatus (100).

15. A module, a device, a headset, a vehicle or cab for a vehicle comprising an apparatus as claimed in any preceding claim.
